# EUROPEAN PATENT SPECIFICATION

(11) **EP 0 496 539 B1**
(45) Date of publication and mention of the grant of the patent: **22.05.1996**
(21) Application number: 92300408.9
(22) Date of filing: 17.01.1992
(51) Int. Cl.: H01M 2/12

(54) **Electric storage battery lid assembly with venting system**
Deckel für elektrische Speicherbatterie mit Entgasungssystem
Couvercle pour accumulateur électrique comportant un système de purge des gaz

(30) Priority: 22.01.1991 GB 9101402
(43) Date of publication of application: 29.07.1992
(73) Proprietor: LUCAS-YUASA BATTERIES LIMITED, Sparkhill, Birmingham (GB)
(72) Inventor: McEwan, Keith John Bruce, Tanworth-in-Arden, Solihull (GB); Rose, Allan Michael, Redditch (GB)
(74) Representative: Carpenter, David

(56) References cited:
- EP-A- 0 123 369
- DE-U- 8 812 468
- DE-U- 9 015 535
- PATENT ABSTRACTS OF JAPAN vol. 4, no. 32 (E-2)(514) 19 March 1980 & JP-A-55006717

## Description

This invention relates to a lid assembly for an electric storage battery.

The invention is particularly concerned with batteries, for road vehicles, of the kind which are usually referred to as "Starting, Lighting, Ignition" (S.L.I.) batteries. Such batteries are rechargeable, lead-acid, batteries usually employing six adjacent cells electrically connected in series. Hydrogen and oxygen gases are evolved from the electrolyte of the cells during charging of the battery and there are known arrangements for venting the explosive gas mixture to atmosphere through a flame trap to minimise the risk of explosive combustion of the mixture within the casing of the battery. In many applications it is desirable that the casing vent is at an end wall of the casing and European Patent Application 305822 illustrates an arrangement whereby such "end-venting" can take place through the intermediary of a porous flame arrestor.

In the arrangement disclosed in European Patent Application 305822 it has been necessary, in order to accommodate the flame arrestor, to provide a chamber in the lid of the battery, the chamber intersecting the venting passage of the battery and being open at the upper surface of the battery to permit insertion of the flame arrestor. It is essential to seal the flame arrestor assembly into the chamber, the seal being needed inter alia at the top face of the battery around the periphery of a relatively thin walled closure element forming part of the flame arrestor. Such a seal is difficult to achieve reliably during mass production of batteries, and of course if leakage occurs at the periphery of the closure member of the arrestor then the arrestor may be rendered ineffective by combustion initiated at the exterior of the battery propagating back through the faulty seal, and around the arrestor to result in explosive combustion within the casing of the battery.

DE-U-8812468 describes a lid assembly including a vent passage, and two-piece moulded insert connected to the vent passage, the insert housing a flame arrestor and being disposed mainly outside the lid moulding. EP-A-0123369 describes a relatively complex battery lid assembly in which the lid includes a vent passage, a flame arrestor element being provided through which gas from the battery cells must pass in order to escape. A combustion chamber is provided on the external side of the flame arrestor element.

It is an obiect of the present invention to provide a lid assembly for a battery as set out in appended claim 1 wherein reliable venting can be achieved in a simple and convenient manner.

In accordance with the present invention there is provided a lid assembly for an electric storage battery, the lid assembly comprising a lid moulding arranged to close, in use, an open upper face of a battery box so as to define therewith a plurality of parallel cell receiving compartments, the lid moulding having external top, side, and end faces, said end faces extending parallel to said compartments in use, the lid moulding including a vent passage open at one end at an end face of the moulding and communicating in use with a plurality of said compartments, and, the assembly further including an insert introduced axially into said vent passage from the open end thereof, the outer surface of said insert sealingly engaging the inner surface of the vent passage, and the through bore of the insert being obstructed by a porous flame arrestor element, the insert defining, at the atmosphere side of the flame arrestor element, a combustion chamber such that gases passing through the porous flame arrestor element and ignited at the atmosphere side thereof can burn readily within the combustion chamber to be consumed at a rate greater than their flow rate through the arrestor element, and thus to be self-extinguishing, wherein the insert including the flame arrestor element is received substantially wholly within the vent passage of the lid moulding.

Preferably said insert sleeve is an interference fit in said vent passage such that the large area of surface contact between the insert sleeve and the wall of the passage effects a seal.

Desirably the outer end of said insert sleeve is adapted to receive a tube coupling whereby gases venting from the insert can be conducted through the tube to a remote location.

Preferably said insert sleeve is received in an enlarged region of the vent passage and the vent passage and its enlarged region are disposed eccentrically of one another such that the passage opens into the lowermost part in use of the region.

Desirably said vent passage is also equipped with a pressure relief valve which opens when gas pressure in the passage exceeds a predetermined value to vent pressure from the passage.

One example of the invention is illustrated in the accompanying drawings wherein:-
Figure 1 is a diagrammatic perspective representation of part of a lid assembly of an electric storage battery,
Figure 2 is a diagrammatic sectional view on the line A-A in Figure 1,
Figure 3 is a view similar to Figure 2 of a modification, and
Figure 4 is a view similar to Figure 3 but of the opposite end of the lid assembly.

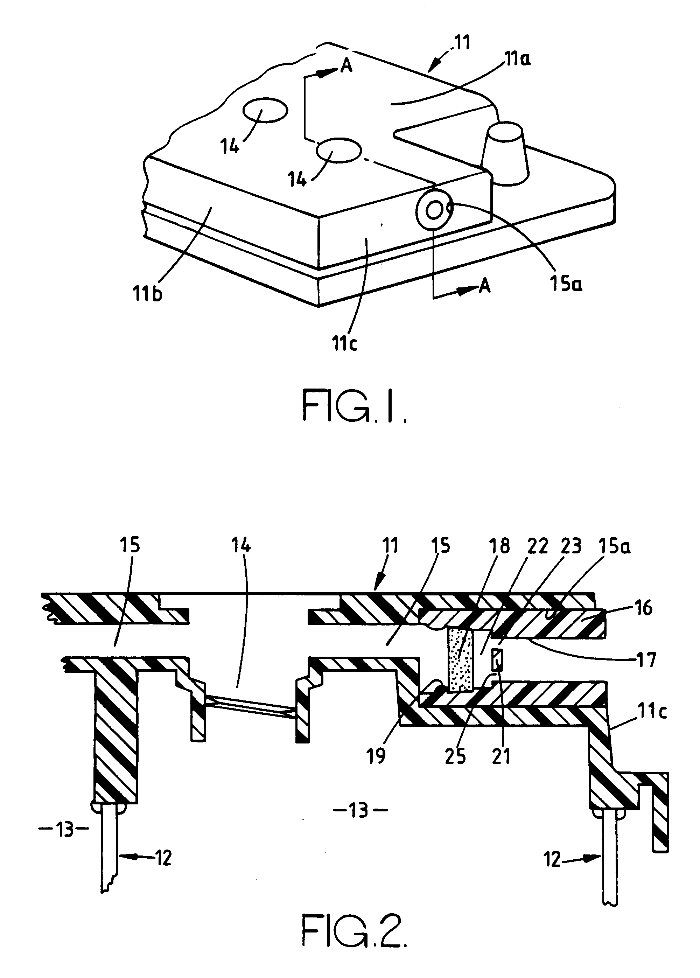

Referring first to Figures 1 and 2 of the drawings the battery casing which is illustrated is basically of a known construction comprising a one-piece polypropylene lid moulding 11 and a battery box 12 also moulded in polypropylene. As will be well understood the lid and box mouldings are, in use, welded together by a known heat-sealing technique to define a casing divided internally into a plurality (usually six) of parallel cell compartments 13.

The lid moulding has external top, side, and end faces 11a, 11b, 11c, the side faces 11b extending transverse to the compartments 13 and the end faces 11c extending parallel to the compartments 13. Above each compartment 13 the lid moulding 11 has a filling aperture 14 whereby electrolyte can be introduced into the cells of the battery individually from the top surface of the lid, the apertures 14 being normally closed by plugs (not shown) received as a sealing, screw fit in the lid moulding 11.

Internally the lid moulding 11 includes a compartment venting passage 15 terminating at one end in an enlarged cylindrical region 15a open at an end face 11c of the lid moulding. The venting passage 15 can communicate with all of the compartments of the battery, but it may, in many applications, be preferred to have a first passage 15 extending from one end face 11c and communicating with the first, second, and third compartments, and a second, separate venting passage extending from the opposite end face 11c and communicating with the sixth, fifth, and fourth compartments. In the event that a second vent passage opening at the opposite end face of the lid moulding is utilised, then it is to be understood that the second vent passage will also have an enlarged cylindrical region 15a housing an insert to be described hereinafter.

Within the cylindrical region 15a of the vent passage 15 is a moulded synthetic resin insert 16 in the form of a hollow sleeve. The insert 16 is introduced axially into the region 15a from the outer, open end thereof at the end face 11c of the lid moulding, an internal shoulder at the junction between the region 15a and the remainder of the vent passage 15 serving to locate the insert axially within the region 15a. The insert 16 is an interference fit within the region 15a and thus there is a substantial area of contact between the outer cylindrical surface of the insert 16 and the inner cylindrical surface of the region 15a providing a gas tight seal between the insert 16 and the lid moulding 11.

The through bore 17 of the insert 16 is enlarged adjacent the axially innermost end of the insert 16 and receives therein a porous ceramic, or synthetic resin flame arrestor element 18. The element 18 is of disc like form and is a tight fit within the enlarged part of the bore 17 such that a gas tight seal is produced between the element 18 and the insert 17. It will be recognised therefore that gases evolved in the battery passing along the vent passage 15 can exit to atmosphere through the insert 17 only by passing through the porous element 18. During construction of the insert 16 the element 18 is pressed into the enlarged region of the bore 17 and is trapped in place by deforming the insert (conveniently by localised melting) to form a ring 19, or a series of projections, preventing withdrawal of the element 18 from the insert 16.

The enlarged portion of the bore 17 extends beyond the atmosphere side of the element 18 and within the bore 17 there is an integral obstruction 21 which, with the enlarged region of the bore and the atmosphere presented face of the element 18, defines a combustion chamber 22. The chamber 22 communicates with the remainder of the bore 17 by way of one or more small apertures 23, the arrangement being such that should the evolving gases be ignited at the open end of the insert 16 then flame may propagate along the bore 17 and into the chamber 22, but such combustion will be self-extinguishing in the chamber 22 since the burn rate within the chamber 22 will exceed the rate at which combustible gases flow into the chamber 22 through the porous element 18. Thus it will not be possible for flame to be maintained at the atmosphere presented surface of the porous element 18 thereby avoiding the risk of damage to the element 18 by continued combustion at its surface.

As mentioned above where a second vent passage 15 opening at the opposite end face 11c of the lid moulding 11 is provided then the enlarged region 15a of that passage will contain a similar insert 16.

The outermost end of the bore 17 of the or each insert is dimensioned to receive a tube coupling member whereby a tube can be connected to the or each gas vent to receive the evolved gases and to conduct them to a remote location. For example, where the battery is located in a closed battery compartment of a vehicle it will be desirable to equip the or each vent with tubes whereby the evolving gases can be discharged to atmosphere outside the battery compartment.

It will be recognised that mechanically it is a relatively simple exercise to mould the lid with an enlarged region 15a of the vent passage 15 and to equip the enlarged region 15a with an insert which is received as an interference fit, and thus requires no additional sealing in order to ensure that it is a gas tight fit within the region 15a.

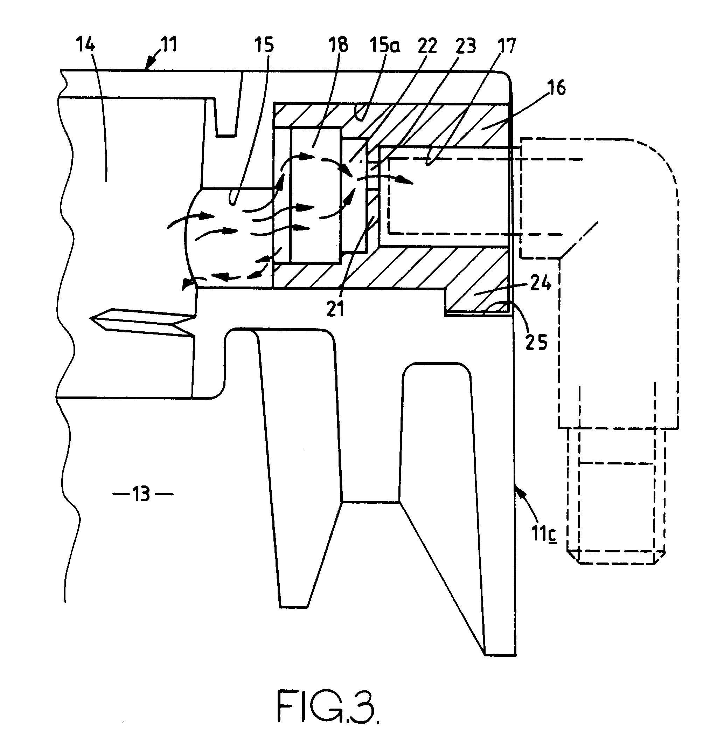

In the modification illustrated in Figure 3 parts corresponding to those illustrated in Figure 2 carry the same reference numerals. It can be seen therefore that the lid moulding 11 includes an internal compartment venting passage 15 terminating at one end in an enlarged cylindrical region 15a open at the end face 11c of the lid moulding. The enlarged cylindrical region 15a is not co-axial with the remainder of the venting passage 15, but instead is eccentrically positioned with respect thereto such that the passage 15a opens into that part of the region 15a which will be lowermost in use.

The insert 16, which is received as an interference fit in the region 15a has a through passage 17 divided into inner and outer regions by an internal wall 21. The internal wall 21 is formed with a pair of small circular venting apertures 23 which are disposed above the axial centre line of the insert 16. The sintered polypropylene disc which constitutes the flame arrestor element 18 is disposed within the insert 16 at the inner side of the wall 21 and a combustion chamber 22 is defined between the outwardly presented face of the element 18 and the inwardly presented face of the wall 21. The combustion chamber 22 acts in the manner described above in that flame propagating back along the passage 17, through the apertures 23, will be self-extinguishing within the chamber 22 since combustion, or controlled minor explosion, will occur within the chamber 22 consuming the gases at a burn rate in excess of the rate at which the gases enter the chamber 22 through the element 18.

As is apparent from Figure 3 the element 18 can be retained within the insert 16 as an interference fit, although the securing mechanism described with reference to Figure 2 could be used if desired. The outer end region of the passage 17 is adapted to receive a tube coupling as described above. In order that the insert 16 can only be introduced into the region 15a in an orientation such that the apertures 23 are above the centre line of the insert in use, the insert includes a radially extending protrusion or key 24 which locates in a corresponding recess 25 in the wall of the region 15a when the correct orientation of the insert 16 relative to the moulding 11 is achieved.

It will be recognised that the positioning of the passage 15 at the lowermost point of the region 15a ensures that any electrolyte collecting or condensing adjacent the insert 16 will not pool, but instead will drain backthrough the passage 15 into the adjacent cell compartment. Moreover, should any electrolyte be carried through the pores of the element 18 then it will not pass beyond the chamber 22 since the apertures 23 form the only outward exit from the chamber 22, and these are disposed above the centre line of the insert 16. Thus any electrolyte carried with gases through the pores of the element 18 will collect in the lower part of the chamber 22 and will drain back through the pores of the element 18 into the passage 15 and thus into the adjacent cell compartment when there is no flow of gas outwardly through the pores of the element 18.

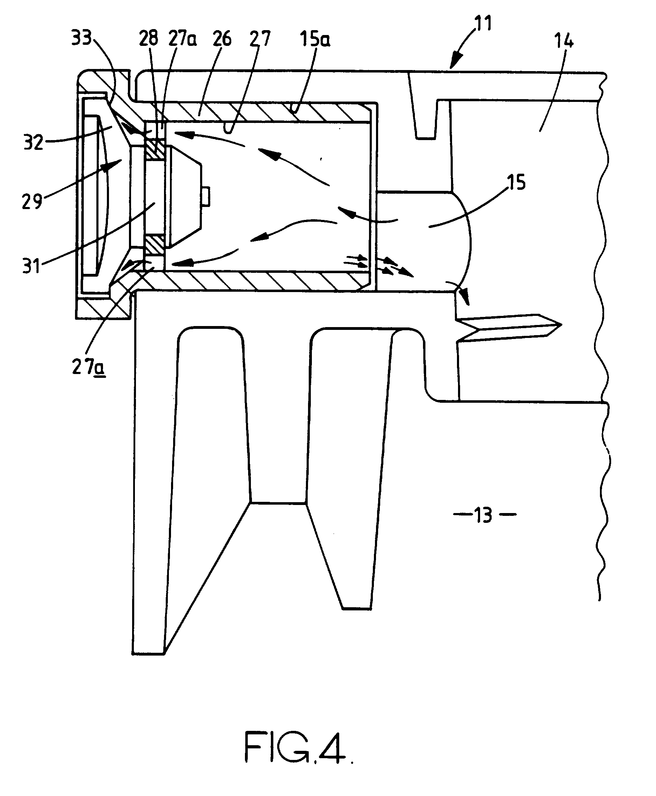

As mentioned above the vent passage 15 may serve the first, second and third compartments of a six compartment battery, and a second, similar passage 15 extending in the opposite direction may serve the fourth, fifth and sixth compartments. The passage 15 opening at the opposite end of the moulding 11 will be provided with a similar insert 16. However, in an embodiment where the passage 15 serves all six compartments then the passage may open at both ends of the lid moulding, being equipped at one end with an insert 16 as shown in Figure 3, and being equipped at its opposite end with a pressure relief valve as illustrated in Figure 4. As can be seen in Figure 4, the opposite end of the passage 15 opens into an enlarged region 15a and as described with reference to Figure 3 the communication between the passage 15 and the region 15a is at the part of the region 15a which is lowermost in use. A moulded synetic resin sleeve 26 is received as an interference fit in the region 15a, the sleeve 26 having a through bore 27 partially closed by an integral internal wall 28. The wall 28 has a centrally disposed aperture within which a retaining portion 31 of a valve element 29 is sealingly received, and around the central aperture the wall 28 is formed with a plurality of spaced smaller apertures 27a. The valve element 29 is formed from a resilient synthetic resin material and includes a disc-like head 32 which makes an annular contact with a valve seat 33 formed on the insert 26 outwardly from the wall 28. The engagement of the head 32 with the seat 33 closes the through passage 27 of the insert 26 so that gases from the passage 15 cannot vent through the insert 26 and instead will vent through the insert 16 at the opposite end of the passage 15. However, should the gas pressure within the battery casing rise above a predetermined value then the pressure applied to the inwardly presented face of the head 32 will flex the head 32 away from the seat 33 thus allowing excess pressure to vent to atmosphere through the insert 26.

If desired the insert 26 and valve element 29 can be redesigned such that the valve element 29 is within the central region of the insert 26, and the insert 26 has a vent tube coupling facility at its outer end such that gases released through the insert 26 can be vented to atmosphere at a remote location.

## Claims

1. A lid assembly, for an electric storage battery, comprising a lid moulding (11) arranged to close, in use, an open upper face of a battery box (12) so as to define therewith a plurality of parallel cell receiving compartments (13), the lid moulding having external top, side, and end faces (11a, 11b, 11c, said end faces (11c) extending parallel to said compartments (12) in use, the lid moulding including a vent passage (15) open at one end at an end face (11c) of the moulding (11) and communicating in use with a plurality of said compartments (13), an insert (16) introduced axially into said vent passage (15) from the open end thereof, the outer surface of said insert (16) sealingly engaging the inner surface of the vent passage (15), and the through bore (17) of the insert (16) being obstructed by a porous flame arrestor element (18), the insert (16) defining, at the atmosphere side of the flame arrestor element (18), a combustion chamber (22) such that gases passing through the porous flame arrestor element (18) and ignited at the atmosphere side thereof can burn readily within the combustion chamber (22) to be consumed at a rate greater than their flow rate through the arrestor element (18), and thus to be self-extinguishing, and characterized in that said insert (16), including said element (18), is received substantially wholly within said passage (15) in said lid moulding (11).

2. An assembly as claimed in Claim 1, characterized in that said insert sleeve (16) is an interference fit in said vent passage (15a) such that the large area of surface contact between the insert sleeve and the wall of the passage effects a seal.

3. An assembly as claimed in Claim 1 or Claim 2, characterized in that the outer end of said insert sleeve (16) is adapted to receive a tube coupling whereby gases venting from the insert sleeve (16) can be conducted through the tube to a remote location.

4. An assembly as claimed in any one of Claims 1 to 3 characterized in that said insert sleeve (16) is received in an enlarged region (15a) of the vent passage (15) and the vent passage (15) and its enlarged region (15a) are disposed eccentrically of one another such that the passage (15) opens into the lowermost part in use of the region (15a).

5. An assembly as claimed in any one of Claims 1 to 4 characterized in that said vent passage (15) is also equipped with a pressure relief valve (29) which opens when gas pressure in the passage (15) exceeds a predetermined value to vent pressure from the passage (15).

## Patentansprüche

1. Deckelanordnung für eine elektrische Speicherbatterie, mit einem Deckel-Formkörper (11), der dazu eingerichtet ist, im Gebrauch eine obere offene Fläche eines Batteriekastens (12) so zu verschließen, daß hiermit eine Vielzahl paralleler, zellenaufnehmender Abteile (13) gebildet wird, wobei der Deckel-Formkörper oben, seitlich und am Ende äußere Stirnflächen (11a, 11b, 11c) aufweist, die Endflächen (11c) sich im Gebrauch parallel zu den Abteilungen (12) erstrecken, der Deckel-Formkörper einen Entlüftungskanal (15) aufweist, der am einen Ende an einer Endfläche (11c) des Formkörpers (11) offen ist und im Gebrauch mit einer Vielzahl der Abteile (13) in Verbindung steht, ein Einsatz (16) axial in den Entlüftungskanal (15) von dessen oberem Ende her eingeführt ist, die äußere Fläche des Einsatzes (16) dichtend in die Innenoberfläche des Entlüftungskanals (15) eingreift, und die Durchgangsbohrung (17) des Einsatzes (16) von einem porösen Flammensperrelement (18) versperrt ist, wobei der Einsatz (16) auf der Umgebungsluftseite des Flammensperrelements (18) eine Brennkammer (22) aufweist, so daß Gase, die durch das poröse Flammensperrelement (18) hindurchtreten und an dessen Umgebungsluftseite gezündet werden, ohne weiteres innerhalb der Brennkammer (22) so abbrennen können, daß sie mit einer Geschwindigkeit verzehrt werden, die größer ist als ihre Strömungsgeschwindigkeit durch das Sperrelement (18) hindurch, und das somit selbstlöschend ist, und dadurch gekennzeichnet, daß der Einsatz (16), der das Element (18) enthält, im wesentlichen gänzlich innerhalb des Kanals (15) im Deckel-Formkörper (11) aufgenommen ist.

2. Anordnung, wie beansprucht im Anspruch 1, dadurch gekennzeichnet, daß die Einsatzhülle (16) im Klemmsitz im Entlüftungskanal (15a) angeordnet ist, so daß die große Oberflächen-Berührungsfläche zwischen der Einsatzhülse und der Wand des Kanals die Dichtung bewirkt.

3. Anordnung, wie beansprucht im Anspruch 1 oder Anspruch 2, dadurch gekennzeichnet, daß das äußere Ende der Einsatzhülse (16) zur Aufnahme einer Rohr- bzw. Schlauchkupplung eingerichtet ist, wodurch Gase, die von der Einsatzhülse (16) aus entströmen, durch das Rohr bzw. den Schlauch hindurch zu einer ferngelegenen Stelle geleitet werden können.

4. Anordnung, wie beansprucht in einem der Ansprüche 1 bis 3, dadurch gekennzeichnet, daß die Einsatzhülse (16) in einem vergrößerten Bereich (15a) des Entlüftungskanals (15) aufgenommen ist und der Entlüftungskanal (15) und sein vergrößerter Bereich (15a) zueinander derart exzentrisch angeordnet sind, daß sich der Kanal (15) in den im Gebrauch untersten Teil des Bereichs (15a) hinein öffnet.

5. Anordnung, wie beansprucht in irgendeinem der Ansprüche 1 bis 4. dadurch gekennzeichnet, daß der Entlüftungskanal (15) auch mit einem Druckentlastungsventil (29) ausgestattet ist, das öffnet, wenn der Gasdruck im Kanal (15) einen vorbestimmten Wert überschreitet, um den Druck aus dem Kanal (15) zu entlüften.

## Revendications

1. Ensemble de couvercle pour un accumulateur électrique comprenant un moulage de couvercle (11) disposé de manière à fermer en service une surface supérieure ouverte d'un boîtier d'accumulateur (12) de manière à former ainsi plusieurs compartiments (13) recevant des cellules parallèles, le moulage de couvercle ayant des faces externes supérieure, latérales et terminales (11a, 11b, 11c), lesdites faces terminales (11c) s'étendant parallèlement audit compartiment (12) en service, le moulage de couvercle comprenant un passage de purge (15) ouvert à une extrémité à une face terminale (11c) du moulage (11) et communiquant en service avec plusieurs desdits compartiments (13), un insert (16) introduit axialement dans ledit passage de purge (15) par l'extrémité ouverte de celui-ci, la face externe dudit insert (16) venant en contact hermétique avec la surface interne du passage de purge (15) et le trou (17) traversant l'insert (16) étant obstrué par un élément anti-retour de flamme poreux (18), l'insert (16) formant, sur la face tournée vers l'atmosphère de l'élément anti-retour de flamme (18), une chambre de combustion (22) telle que les gaz traversant l'élément anti-retour de flamme poreux (18) et allumés sur le côté à l'atmosphère de celui-ci puissent facilement brûler dans la chambre de combustion (22) de manière à être consommés à une vitesse supérieure à leur débit de passage à travers l'élément anti-retour (18) et à être ainsi auto-extinguibles, et caractérisé en ce que ledit insert (16) comprenant ledit élément (18) est placé de manière essentiellement complète dans ledit passage (15) dans ledit moulage de couvercle (11).

2. Ensemble selon la revendication 1, caractérisé en ce que ledit manchon d'insert (16) est ajusté à serrage dans ledit passage de purge (15a), de façon que la grande surface de contact entre le manchon d'insert et la paroi du passage réalise un joint hermétique.

3. Ensemble selon la revendication 1 ou 2, caractérisé en ce que l'extrémité externe dudit manchon d'insert (16) est conçue pour recevoir une connexion pour tube par lequel les gaz provenant du manchon d'insert (16) peuvent être amenés par le tube à un emplacement éloigné.

4. Ensemble selon l'une quelconque des revendications 1 à 3, caractérisé en ce que ledit manchon d'insert (16) est placé dans une région agrandie (15a) du passage de purge (15) et le passage de purge (15) et sa région agrandie (15a) sont disposés excentriquement l'un par rapport à l'autre de façon que le passage (15) s'ouvre dans la partie la plus basse en service de la région (15a).

5. Ensemble selon l'une quelconque des revendications 1 à 4, caractérisé en ce que ledit passage de purge (15) est également équipé d'une vanne éliminant la pression (29) qui s'ouvre quand la pression du gaz dans le passage (15) dépasse une valeur prédéterminée de manière à éliminer la pression du passage (15).
